# EUROPEAN PATENT SPECIFICATION

(11) **EP 3 162 253 B1**
(45) Date of publication and mention of the grant of the patent: **15.08.2018**
(21) Application number: 16175084.9
(22) Date of filing: 17.06.2016
(51) Int. Cl.: A47J 27/08

(54) **LOW PRESSURE LID**
NIEDERDRUCKDECKEL
COUVERCLE DE BASSE PRESSION

(30) Priority: 30.10.2015 CN 201520850288 U
(43) Date of publication of application: 03.05.2017
(73) Proprietor: Zhejiang Zhongxin Cookware Co., Ltd., Yongkang Economic Development Zone Yongkang City Zhejiang (CN)
(72) Inventor: Chengshao, Hu, Yongkang City Zhejiang (CN)
(74) Representative: Bendele, Tanja

(56) References cited:
- EP-A1- 2 687 132
- EP-A1- 2 702 907
- EP-A2- 1 535 552
- DE-B3-102007 018 390

## Description

This invention relates to a lid, in particular to a low pressure lid, comprising a safety valve and pressure release valve as well as a saddle, a knob, a left fixing claw, a right fixing claw and an elastic resilience element, wherein the elastic resilience element connects the left fixing claw and the right fixing claw providing an elastic resilience force, which allows the left fixing claw and the right fixing claw to move inwards or outwards during rotation of the knob.

A pressure lid of the state of the art is disclosed in EP-A-2702907.

Low pressure cookers are mainly used to process food that cannot be processed at high temperature, so as to achieve the purpose of not destroying its nutrient content. In general, a current low pressure lid is provided with an pressure release valve to exhaust air and reduce air pressure in the cooker when air pressure reaches a certain level. After usage, the lid may press against the cooker by external atmospheric pressure due to relatively low air pressure in the cooker, and some users sometimes choose to move the whole cooker by lifting the lid. However, if the cooker contains plenty of food, the lid cannot provide enough supporting force and the cooker may fall off from the lid and hit the user on the move. So, these lids reveal poor safety.

The object of the invention is thus to overcome the disadvantages of the prior art. In particular, a new low pressure lid is provided, which enables autonomic pressure release and furthermore a simple but strong locking and unlocking mechanism to allow save moving of the whole low pressure cooker through grasping the knob, thus providing a convenient handling.

In order to solve the aforementioned technical problems, the object of the present invention is achieved by means of the features of independent claim 1.

The safety valve is interacted with the pressure release valve to allow the low pressure lid to exhaust air successfully and ensure its safe use. The saddle can improve aesthetics of the invention covering the left fixing claw and the right fixing claw and can stabilize the knob. In addition the saddle can prevent dust and other fine particles entering the left fixing claw and the In a preferred embodiment of the invention, the bottom of the knob of the pressure lid is provided with a shaft, in particular with an elliptical shaft, comprising a major axis and a minor axis for driving the left claw hook and the right claw hook to move inwards or outwards. The major axis part of the shaft is longer than the minor axis part of the shaft. In usage, during the rotation of the knob, when the major axis of the shaft at the bottom of the knob turns to the left fixing claw and the right fixing claw, the left fixing claw and the right fixing claw are pushed outwards and do not lock the cooker body. When the minor axis of the shaft at the bottom of the knob turns to the left fixing claw and the right fixing claw According to the right fixing claw are pulled back and lock the cooker body in the presence of an elastic resilience force of the elastic resilience element. Because of this simple mechanism the low pressure lid can be handled conveniently.

In another preferred embodiment of the invention, the inner ends of the left fixing claw and the right fixing claw are provided with a first bracket and a second bracket respectively, wherein the elastic resilience element being attached in the first bracket and the second bracket allows the left fixing claw and the right fixing claw to be pushed outwards or pulled back smoothly.

In a further preferred embodiment of the invention the lid body of the low pressure lid is provided with a silicone edge, which provides the lid body with improved sealing property. In particular, the silicone edge prevents unintentionally exhaust of air and steam during cooking.

In a further preferred embodiment of the invention the lid body of the low pressure lid is a glass lid, so that the real-time observation of the cooking material in the cooker body is facilitated.

In a further preferred embodiment of the invention the top part of the knob of the low pressure lid, in particular the outer circumference of the knob, is also provided with an anti-skidding area, particularly with a corrugated surface having anti-skidding properties, which allows the knob to rotate without any difficulty. In particular, the anti-skidding area facilitates grasping and turning of the knob.

In an additional embodiment of the invention a set is disclosed comprising a low pressure lid and a cocking pot. This set may comprise a cocking pot that further comprises a circumferential edge, in particular an at least partial protruding edge, and more preferred an edge that is circumferentially protruding, in particular to be matched with the fixing claws.

According to another aspect of the use of a pressure lit is disclosed in combination with a cocking pot according, in particular wherein the cocking pot further comprises an at least partial protruding circumferential edge, wherein the edge is to be matched with the fixing claws.

Specific embodiments of the invention shall be illustrated in the following on the basis of figures 1-3, though without limiting the scope of the invention.
Figure 1: shows a schematically exploded view of the low pressure lid according to the invention and the corresponding cooker body; and
Figure 2: shows schematically a cross-sectional view of the low pressure lid on the corresponding cooker body in locking condition according to the invention; and
Figure 3: shows schematically a cross-sectional view of the low pressure lid on the corresponding cooker body in unlocking condition according to the invention

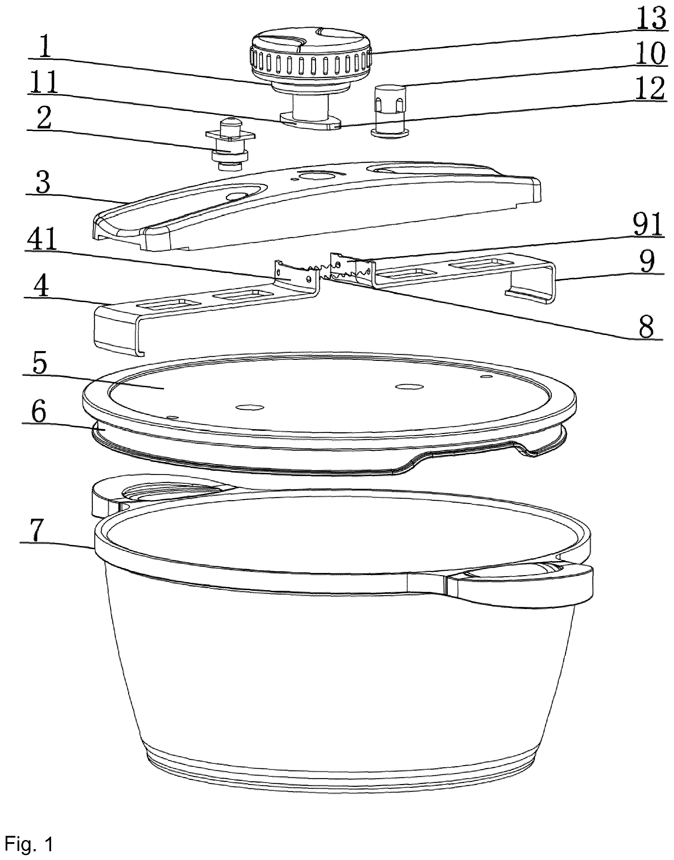

Figure 1 shows an exploded view of the low pressure lid and the corresponding cooker body **7.** The low pressure lid comprises a lid body **5,** a safety valve **2** and a pressure release valve **10.** The safety valve **2** and the pressure release valve **10** are arranged at the lid body **5.** The low pressure lid further comprises a saddle **3,** a knob **1,** a left fixing claw **4,** a right fixing claw **9** and an elastic resilience element **8.** The saddle **3** is arranged on the lid body **5** and the left fixing claw **4** and the right fixing claw **9** are arranged between the saddle **3** and the lid body **5.** The elastic resilience element **8** is connected with the left fixing claw **4** and the right fixing claw **9** respectively and provides an elastic resilience force. The knob **1** is rotationally arranged on the saddle **3** and drives the left fixing claw **4** and the right fixing claw **9** to move inwards or outwards. In usage, the whole lid covers the cooker body **7.**

Furthermore the inner ends of the left fixing claw **4** and the right fixing claw **9** are provided with a first bracket **41** and a second bracket **91** respectively. Thereby the elastic resilience element **8** is attached in the first bracket **41** and the second bracket **91** respectively.

Further the lid body **5** can be provided with a silicone edge **6.** Preferably, the silicone edge prevents unintentionally exhaust of air and steam during cooking.

In a further embodiment the lid body **5** is a glass lid.

Further the bottom of the knob **1** is provided with a shaft, in particular an elliptical shaft, which comprises a major axis **12** and a minor axis **11** for driving the left fixing claw **4** and the right fixing claw **9** to move inwards or outwards.

In a further embodiment the top part of the knob **1,** in particular the outer circumference of the knob **1,** can also be provided with an anti-skidding area **13.** Preferably, the anti-skidding area facilitates grasping and turning of the knob **1.**

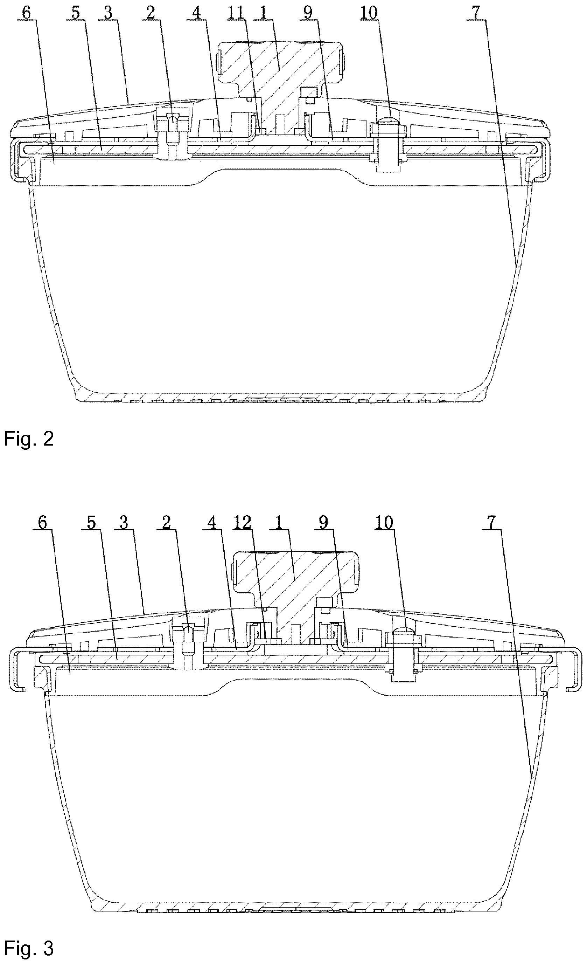

Figure 2 shows a cross-sectional view of the low pressure lid being in locking condition on the corresponding cooker body **7.** In this condition, the left fixing claw **4** and the right fixing claw **9** access to the upper edge of the cooker body. For activating the locking mechanism the knob **1** is turned to allow the left fixing claw **4** and the right fixing claw **9** to hook the edge of the cooker body **7** tightly and lock it. During cooking, when air pressure in the cooker body **7** reaches a certain level, air pressure therein will be exhausted by the pressure release valve **10** to keep the cooker body **7** in a low pressure state. The safety valve **2** can ensure safety when the low pressure lid is used. After cooking, when the cooker body **7** is moved, the lid and the cooker body **7** can be moved as a whole by grasping the knob **1.** After the cooker body **7** is moved in place, the knob **1** can be turned again to allow the left fixing claw **4** and the right fixing claw **9** to push outwards and unlock the cooker body **7.** Then the lid can be removed from the cooker body **7** safely.

Figure 3 shows a cross-sectional view of the low pressure lid being in unlocking condition on the corresponding cooker body **7.** In this condition, the left fixing claw **4** and the right fixing claw **9** do not access the upper edge of the cooker body. For unlocking the locking mechanism the knob **1** is turned again or the other way around to drive the left fixing claw **4** and the right fixing claw **9** to move outwards and unlock the cooker body **7.** When the major axis **12** of the shaft at the bottom of the knob **1** turns to the left fixing claw **4** and the right fixing claw **9** during turning of the knob **1,** the left fixing claw **4** and the right fixing claw **9** are pushed by the major axis **12** of the shaft to move outwards and realize the function of unlocking the cooker body **7.** When the knob **1** is turned again and the minor axis **11** of the shaft at the bottom of the knob **1** turns to the left fixing claw **4** and the right fixing claw **9,** the left fixing claw **4** and the right fixing claw **9** are pulled back and lock the cooker body **7** in the presence of an elastic resilience force of the elastic resilience element **8.**

In conclusion, the specific embodiments shall only illustrate the invention. Any change and modification made according the application scope of the invention shall fall within the protection scope of the invention.

### List of reference numerals

1 knob
2 safety valve
3 saddle
4 left fixing claw
5 lid body
6 silicone edge, belonging to the lid body
7 cooker body
8 elastic resilience element
9 right fixing claw
10 pressure release valve
11 minor axis, belonging to the shaft at the bottom of the knob
12 major axis, belonging to the shaft at the bottom of the knob
13 anti-skidding area, belonging to the knob
41 first bracket, belonging to the left fixing claw
91 second bracket, belonging to the right fixing claw

## Claims

1. A low pressure lid, comprising a lid body (5), a safety valve (2) and a pressure release valve (10), wherein the safety valve (2) and the pressure release valve (10) being arranged at the lid body (5), wherein the low pressure lid further comprises a saddle (3), a knob (1), a left fixing claw (4), a right fixing claw (9) and an elastic resilience element (8), wherein the saddle (3) being arranged on the lid body (5) and the left fixing claw (4) and the right fixing claw (9) being arranged between the saddle (3) and the lid body (5), wherein the elastic resilience element (8) connects the left fixing claw (4) and the right fixing claw (9) providing an elastic resilience force, and the knob (1) being rotationally arranged on the saddle (3) drives the left fixing claw (4) and the right fixing claw (9) to move inwards or outwards, wherein the bottom of the knob (1) is provided with a shaft comprising a major axis (12) and a minor axis (11) for driving the left fixing claw (4) and the right fixing claw (9) to move inwards or outwards.

2. The low pressure lid according to claim 1, **characterized in that** the inner ends of the left fixing claw (4) and the right fixing claw (9) are provided with a first bracket (41) and a second bracket (91) respectively, wherein the elastic resilience element (8) is attached in the first bracket (41) and the second bracket (91).

3. The low pressure lid according to claim 1, **characterized in that** the top part of the knob (1) is also provided with an anti-skidding area (13).

4. The low pressure lid according to claim 1, **characterized in that** the lid body (5) is a glass lid.

5. The low pressure lid according to claim 1, **characterized in that** the lid body (5) is provided with a silicone edge (6).

6. Set comprising a low pressure lid according to claim 1 and a cocking pot.

7. Set according to claim 6, wherein the cocking pot further comprising circumferential edge, in particular an at least partial protruding edge, more preferred an edge that is circumferentially protruding, in particular to be matched with the fixing claws (4, 9).

8. Use of a pressure lid according to any of claims 1 to 5 in combination with a cocking pot according to any of claims 6 or 7, in particular wherein the cocking pot further comprising an at least partial protruding circumferential edge, wherein the edge is to be matched with the fixing claws (4, 9).

## Patentansprüche

1. Niederdruckdeckel umfassend einen Deckelkörper (5), ein Sicherheitsventil (2) und ein Druckentlastungsventil (10), wobei das Sicherheitsventil (2) und das Druckentlastungsventil (10) am Deckelkörper (5) angeordnet sind, wobei der Niederdruckdeckel ferner einen Sattel (3), einen Knopf (1), eine linke Befestigungskralle (4), eine rechte Befestigungskralle (9) und ein elastisches Rückstellelement (8) umfasst, wobei der Sattel (3) auf dem Deckelkörper (5) angeordnet ist und die linke Befestigungskralle (4) und die rechte Befestigungskralle (9) zwischen dem Sattel (3) und dem Deckelkörper (5) angeordnet sind, wobei das elastische Rückstellelement (8) die linke Befestigungskralle (4) und die rechte Befestigungskralle (9) unter Bereitstellung einer elastischen Rückstellkraft verbindet, und der Knopf (1), der drehbar auf dem Sattel (3) angeordnet ist, die linke Befestigungskralle (4) und die rechte Befestigungskralle (9) nach innen oder nach außen treibt, wobei die Unterseite des Knopfes (1) mit einem Schaft umfassend eine Hauptachse (12) und eine Nebenachse (11) versehen ist, um die linke Befestigungskralle (4) und die rechte Befestigungskralle (9) nach innen oder nach außen zu treiben.

2. Niederdruckdeckel nach Anspruch 1, **dadurch gekennzeichnet, dass** jeweils die inneren Enden der linken Befestigungskralle (4) und der rechten Befestigungskralle (9) mit einer ersten Klammer (41) und einer zweiten Klammer (91) versehen sind, wobei das elastische Rückstellelement (8) in der ersten Klammer (41) und der zweiten Klammer (91) angebracht ist.

3. Niederdruckdeckel nach Anspruch 1, **dadurch gekennzeichnet, dass** der obere Teil des Knopfes (1) auch mit einem Anti-Rutsch-Bereich (13) versehen ist.

4. Niederdruckdeckel nach Anspruch 1, **dadurch gekennzeichnet, dass** der Deckelkörper (5) ein Glasdeckel ist.

5. Niederdruckdeckel nach Anspruch 1, **dadurch gekennzeichnet, dass** der Deckelkörper (5) mit einem Silikonrand (6) versehen ist.

6. Set umfassend einen Niederdruckdeckel nach Anspruch 1 und einen Kochtopf.

7. Set nach Anspruch 6, wobei der Kochtopf ferner eine umlaufende Kante, insbesondere eine mindestens teilweise vorstehende Kante, weiter bevorzugt eine Kante, die umlaufend vorsteht, insbesondere zur Kopplung mit den Befestigungskrallen (4, 9), umfasst.

8. Verwendung eine Druckdeckels nach einem der Ansprüche 1 bis 5 in Kombination mit einem Kochtopf nach einem der Ansprüche 6 oder 7, wobei insbesondere der Kochtopf ferner eine mindestens teilweise vorstehende umlaufende Kante umfasst, wobei die Kante mit den Befestigungskrallen (4, 9) zu koppeln ist.

## Revendications

1. Un couvercle à basse pression comprenant un corps de couvercle (5), une soupape de sécurité (2) et une soupape de décharge de pression (10), selon lequel la soupape de sécurité (2) et la soupape de décharge de pression (10) sont arrangées au corps de couvercle (5), selon lequel le couvercle à basse pression comprend en outre un selle (3), un bouton (1), une griffe de fixation gauche (4), une griffe de fixation droite (9) et un élément de résilience élastique (8), selon lequel le selle (3) est arrangé sur le corps de couvercle (5) et la griffe de fixation gauche (4) et la griffe de fixation droite (9) sont arrangées entre le selle (3) et le corps de couvercle (5), selon lequel l'élément de résilience élastique (8) connecte la griffe de fixation gauche (4) et la griffe de fixation droite (9) fournissant une force de résilience élastique, et le bouton (1) étant arrangé rotatif sur le selle (3), pousse la griffe de fixation gauche (4) et la griffe de fixation droite (9) vers l'intérieur ou vers l'extérieur, selon lequel le dessous du bouton (1) est pourvu d'un arbre comprenant un grand axe (12) et un petit axe (11) pour poussant la griffe de fixation gauche (4) et la griffe de fixation droite (9) vers l'intérieur ou vers l'extérieur.

2. Le couvercle à basse pression selon la revendication 1, caractérisé ein ce que les extrémités intérieures de la griffe de fixation gauche (4) et de la griffe de fixation droite (9) sont pourvues d'un premier crampon (41) et un deuxième crampon (91) respectivement, selon lequel l'élément de résilience élastique (8) est attaché dans le premier crampon (41) et le deuxième crampon (91).

3. Le couvercle à basse pression selon la revendication 1, **caractérisé en ce que** la partie supérieure du bouton (1) est aussi pourvue d'une zone antidérapante.

4. Le couvercle À basse pression selon la revendication 1, **caractérisé en ce que** le corps de couvercle (5) est un couvercle en verre.

5. Le couvercle À basse pression selon la revendication 1, **caractérisé en ce que** le corps de couvercle (5) est pourvu d'un bord silicone (6).

6. Un set comprenant un couvercle à basse pression selon la revendication 1 et un cuve.

7. Le set selon la revendication 6, selon lequel la cuve comprend en outre un bord circonférentiel, en particulière un bord saillant au moins partiel, plus préféré un bord qui saille circonférentiellement, en particulière à être assorti aux griffes de fixation (4, 9).

8. Utilisation d'un couvercle À pression selon l'une des revendications 1 à 5 en combinaison avec une cuve selon l'une des revendications 6 ou 7, selon lequel en particulière la cuve comprend en outre un bord circonférentiel saillant au moins partiel, selon lequel le bord est à être assorti aux griffes de fixation.
